Europäisches Patentamt

European Patent Office

Office européen des brevets

(11) Numéro de publication : **0 032 466**
**B1**

(12) # FASCICULE DE BREVET EUROPÉEN

(45) Date de publication du fascicule du brevet :
24.04.85

(51) Int. Cl.⁴ : **G 02 B 6/24**

(21) Numéro de dépôt : **81400010.5**

(22) Date de dépôt : **07.01.81**

(54) **Connecteur pour fibres optiques.**

(30) Priorité : **11.01.80 FR 8000576**

(43) Date de publication de la demande :
**22.07.81 Bulletin 81/29**

(45) Mention de la délivrance du brevet :
**24.04.85 Bulletin 85/17**

(84) Etats contractants désignés :
**DE GB IT NL**

(56) Documents cités :
**FR-A- 2 265 110**
**FR-A- 2 388 287**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Bientz, André**
**21 bis, rue Salvador Allendé**
**F-92240 Malakoff (FR)**
Inventeur : **Kling, Bernard**
**22, rue de l'Ormeteau**
**F-91790 Boissy Sous Saint Yon (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne un connecteur pour fibres optiques. Elle s'applique au raccordement de tronçons de fibres optiques pour la réalisation d'une liaison continue à distance, permettant la transmission d'informations optiques.

On sait que la qualité de la transmission d'informations par fibres optiques dépend notamment de la qualité des couplages entre les tronçons de fibres de chaque ligne de transmission. En effet, le couplage entre deux extrémités de fibres doit être réalisé en respectant l'alignement axial des fibres à coupler et en maintenant un faible écartement des surfaces frontales aux extrémités des fibres à coupler, car il est nécessaire de protéger les extrémités des fibres en évitant un contact direct. L'utilisation de plus en plus importante des fibres optiques exige que les connexions entre tronçons de fibres soient rapides, simples, tout en respectant l'alignement des fibres ainsi que l'écartement entre les extrémités des fibres à coupler. Enfin, les connecteurs de fibres optiques doivent être étanches vis-à-vis du milieu environnant et le couplage qu'ils permettent de réaliser doit être suffisamment souple pour éviter toute détérioration des tronçons de fibres à l'intérieur du connecteur, notamment en présence de contraintes mécaniques externes. Ces contraintes peuvent être longitudinales ou transversales par rapport aux fibres à coupler.

Des connecteurs connus permettent de réaliser un couplage entre fibres optiques. C'est le cas par exemple des connecteurs décrits dans les brevets FR-A-2 388 287 et FR-A-2 265 110.

L'invention a pour but de réaliser un connecteur de fibres optiques répondant à tous ces buts et permettant en outre de conserver la qualité de la transmission optique après chaque démontage et remontage du connecteur.

L'invention a pour objet un connecteur de fibres optiques selon la revendication 1.

Selon une autre caractéristique, les moyens de retenue des extrémités de fibres sont constitués par des bagues solidaires de chaque fibre à son extrémité et s'engageant dans les traversées du barillet, de sorte que la surface frontale de chaque bague corresponde à la surface frontale de la fibre correspondante, les surfaces frontales de chaque fibre et de la bague qui lui correspond étant en retrait par rapport à la surface frontale de la partie correspondante du barillet.

Selon une autre caractéristique, les éléments d'alignement des fibres comprennent au moins un pion de positionnement s'engageant dans chacune des parties du barillet.

Selon une autre caractéristique, les moyens de retenue des extrémités de fibres sont constitués par des bagues solidaires de chaque fibre à son extrémité, de manière que la surface frontale de chaque bague corresponde à la surface frontale de la fibre correspondante, les traversées dans une première partie du barillet étant constituées de manière que les surfaces frontales des bagues soient en retrait par rapport à la surface frontale de cette première partie de barillet, les traversées dans la deuxième partie du barillet étant constituées de manière que les surfaces frontales des bagues soient en avant de la surface frontale de cette deuxième partie de barillet, de sorte que la jonction des extrémités des fibres s'opère dans la première partie de barillet, les éléments d'alignement des fibres étant constitués par les bagues dans la deuxième partie de barillet, ces bagues présentant une surface extérieure conique dans leur partie qui est située en avant de la surface frontale de la deuxième partie de barillet, cette surface extérieure conique s'engageant dans la surface intérieure partiellement conique, de la traversée correspondante de la première partie du barillet.

D'autres caractéristiques et avantages de l'invention ressortiront encore de la description qui va suivre, donnée en référence aux dessins annexés dans lesquels :

la figure 1 est une coupe longitudinale schématique d'un connecteur conforme à l'invention,

la figure 2 représente schématiquement quelques-unes des fibres du connecteur de la figure 1, au niveau de leur extrémité de couplage, dans un premier mode de réalisation du connecteur.

la figure 3 représente de manière plus détaillée le connecteur de la figure 1, selon une coupe longitudinale, au niveau de la jonction des fibres, selon le premier mode de réalisation du connecteur,

la figure 4 est une coupe schématique longitudinale du connecteur de la figure 1, au niveau de la jonction des fibres, pour un second mode de réalisation du connecteur conforme à l'invention.

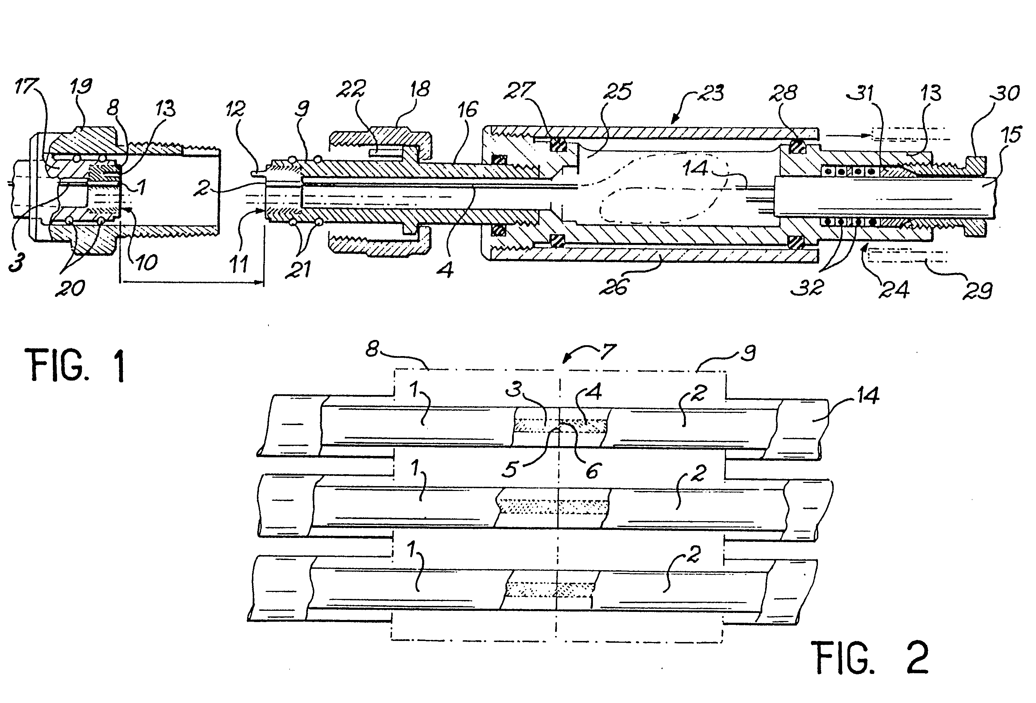

Sur la figure 1, on a représenté schématiquement en coupe longitudinale un connecteur conforme à l'invention.

Sur la figure 2, on a représenté de manière plus détaillée, la jonction des extrémités de tronçons de fibres, à l'intérieur de ce connecteur, pour un premier mode de réalisation de celui-ci. Ce connecteur comprend des moyens 1, 2 de retenue des extrémités de fibres 3, 4 à relier, ainsi que des moyens d'assemblage et d'alignement de ces fibres ainsi retenues ; ces moyens d'assemblage et d'alignement maintiennent en regard les surfaces frontales planes 5, 6 des fibres à relier, de manière à aligner les axes optiques de ces fibres. Ils sont constitués par un barillet 7 en deux parties 8, 9 présentant des traversées dans lesquelles s'engagent respectivement les moyens de retenue 1, 2 des extrémités des fibres à relier. Les deux parties de barillet présentent des surfaces frontales 10, 11 en regard, parallèles aux surfaces frontales 5, 6 des fibres, ainsi que des éléments d'alignement des fibres à relier.

Dans ce premier mode de réalisation du connecteur conforme à l'invention, les éléments d'alignement comprennent au moins un pion de positionnement 12, s'engageant dans les parties 8 et 9 du barillet.

Il est bien évident que le nombre des pions de positionnement qui permettent d'aligner les deux parties du barillet et, par conséquent, les fibres que ces parties soutiennent, peut être variable ; généralement deux pions de positionnement sont nécessaires pour assurer un très bon alignement. Ces pions de positionnement seront décrits plus loin en détail.

Dans ce premier mode de réalisation du connecteur conforme à l'invention, les moyens de retenue 1, 2 des fibres à relier sont constitués par des bagues dans lesquelles s'engagent les extrémités 3, 4 des fibres à relier ; ces fibres peuvent être maintenues à l'intérieur des bagues par collage. Une gaine 14 entoure chacune des fibres à relier tandis qu'une gaine principale 15 entoure l'ensemble des fibres.

Comme on le verra plus loin en détail, des moyens démontables permettent de maintenir en contact, grâce à des moyens de butée, les surfaces frontales des deux parties du barillet, de manière que les surfaces frontales des fibres à relier présentent un léger écartement ; ce léger écartement permet de ne pas détériorer les extrémités de fibres. Afin d'obtenir un écartement calibré, on utilise un outillage spécial, constitué par un barillet de positionnement symétrique du barillet à calibrer, où l'on a fixé des fibres dont les embouts dépassent de la surface frontale d'une longueur égale à la moitié de l'écartement recherché. Ce barillet est présenté en face de chacun des barillets du connecteur, de manière à enfoncer les fibres de ces deux barillets du connecteur de ladite longueur. La précision obtenue est très bonne et d'une bonne reproductibilité. Ce barillet de positionnement n'est pas représenté sur les figures. Les moyens de butée sont constitués par des pièces 16, 17 supportant chacune des parties du barillet ; les moyens démontables sont constitués par des bagues 18, 19 prenant appui respectivement sur les pièces de butée 16, 17 permettant de maintenir en contact les surfaces frontales des deux parties de barillet. La bague 18 présente un filetage intérieur tandis que la bague 19 présente un filetage extérieur correspondant au filetage intérieur de la bague 18 ; lors du montage du connecteur, ces deux bagues sont vissées l'une sur l'autre.

Le connecteur comprend également des moyens élastiques 20, 21 qui seront décrits plus loin en détail, et qui permettent de maintenir l'étanchéité autour des surfaces frontales des deux parties du barillet à l'intérieur des bagues 18 et 19. Le pion de positionnement 22 permet d'assurer le positionnement de la butée 16 par rapport à la bague 19 lors du montage.

Le connecteur comprend en outre, pour les deux modes de réalisation de l'invention, dans le prolongement des moyens de butée et solidaires de ceux-ci, une douille 23 traversée par les fibres à relier grâce à un passage étanche 24. La douille 23 comprend une partie creuse 25 qui permet d'emmagasiner une longueur de fibre supérieure à la longueur de la partie creuse de cette douille. Cette douille comprend également une bague 26, vissée sur le prolongement de la pièce de butée 16 ; l'étanchéité vis-à-vis de l'extérieur est assurée par les joints élastiques 27, 28.

La pièce 16, afin de permettre le montage de la bague 18, est vissée dans la douille 23 ; l'étanchéité de cette jonction est assurée par un joint torique, par exemple, non référencé.

On a représenté en 29 la position de la bague 26, lorsque celle-ci est démontée. Le passage étanche 24 est constitué par un écrou percé 30 qui se visse dans l'extrémité 13 de la douille ; cet écrou permet, grâce à la forme conique de sa base, d'agir sur une pince « en tulipe », 31, qui enserre la gaine 15 entourant l'ensemble des fibres optiques. La pince en tulipe est une bague dont une extrémité conique est fendue, de manière que le serrage de l'écrou 30 provoque le serrage de la gaine 15. La douille 23 permet d'emmagasiner une certaine longueur de fibres optiques de manière à assurer une meilleure souplesse du connecteur dans la direction axiale des fibres. Cette douille permet aussi de réparer l'extrémité d'une ou plusieurs fibres à relier lorsqu'un incident de montage, par exemple, rend nécessaire le remplacement d'une ou plusieurs bagues de retenue. Les joints élastiques 27, 28 et 32 permettent d'assurer l'étanchéité entre l'intérieur et l'extérieur de la douille 23.

Comme on le verra plus loin en détail, les moyens élastiques d'étanchéité 20 et 21 jouent le même rôle. Il est bien évident qu'une douille identique à la douille 23 pourrait être présente sur la partie opposée du connecteur, du côté de la pièce de butée 17.

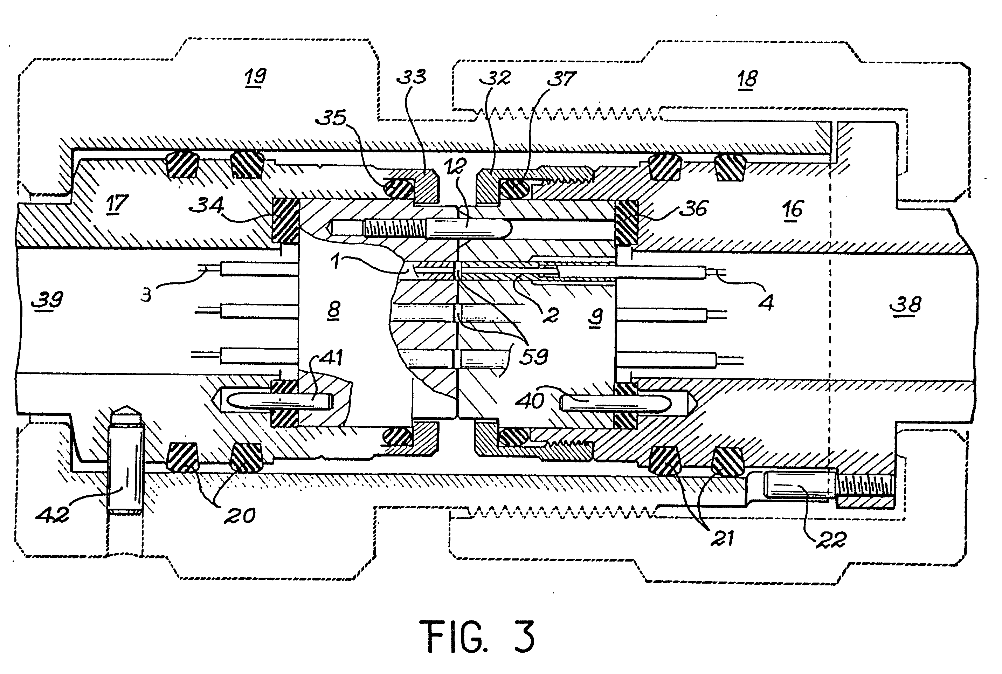

La figure 3 représente de manière plus détaillée le connecteur des figures 1 et 2, selon une coupe longitudinale, au niveau de la jonction du connecteur. Les mêmes éléments portent les mêmes références sur cette figure et sur les figures précédentes.

On a représenté en 12 l'un des pions de positionnement des deux parties 8, 9 du barillet ; ce pion permet de positionner correctement les deux parties du barillet de manière à aligner les fibres 3, 4 ; les bagues de retenue de chacune des extrémités des fibres sont représentées en 1, 2 et s'engagent dans les traversées correspondantes des deux parties du barillet. Les pièces de butées sont représentées en 16, 17 tandis que les bagues d'assemblage sont représentées en 18, 19.

Enfin, on a représenté en 20, 21 les joints élastiques qui permettent d'assurer l'étanchéité autour des surfaces frontales des fibres à relier.

Comme représenté sur la figure, les deux parties 8, 9 du barillet sont assemblées avec les pièces de butée 17, 16, par l'intermédiaire des douilles filetées 62, 33 ; ces douilles d'extrémité prennent appui sur des épaulements respectifs de chacune des parties du barillet. Des joints souples 34, 35, 36 et 37 permettent d'assurer l'étanchéité entre les surfaces frontales des deux parties du barillet et les parties creuses 38, 39 des pièces de butée 16, 17.

Enfin, on a représenté sur cette figure, le pion de positionnement 22 de la pièce de butée 16 par rapport à la bague d'assemblage 19. De la même manière, on a représenté en 40 et 41 des pions de positionnement de chacune des parties du barillet par rapport aux pièces de butée correspondantes. Ces divers pions assurent le positionnement des divers éléments du connecteur, mais permettent également d'éviter, lors du montage la rotation des pièces de butée et des deux parties du barillet à l'intérieur des bagues 18, 19. La vis 42 immobilise la butée 17 dans la bague 19. Grâce à ce montage, l'étanchéité est assurée autour des surfaces frontales des fibres à relier et l'alignement de ces fibres est parfaitement réalisé ;

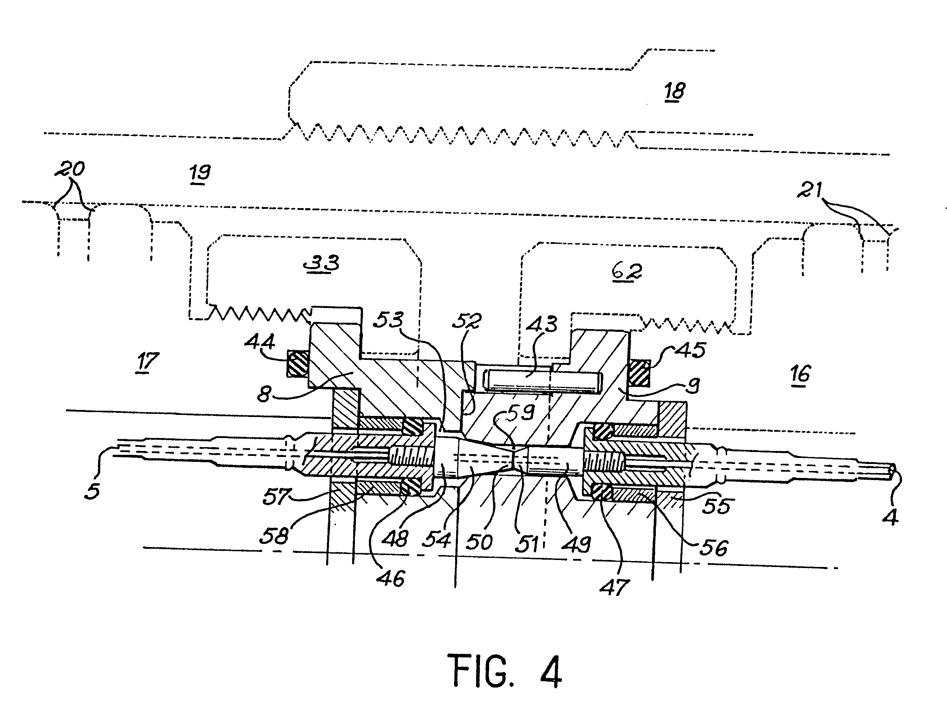

En référence à la figure 4, on a représenté, en coupe schématique longitudinale, un connecteur conforme à l'invention au niveau de la jonction des fibres, pour un second mode de réalisation de ce connecteur. Les mêmes éléments portent les mêmes références sur cette figure et sur les figures précédentes.

Sur cette figure, on a représenté les deux parties 8, 9 du barillet, les bagues 18, 19 d'assemblage, les pièces 16, 17 de butée avec leurs douilles d'extrémité 62, 33 ; le pion 43 représenté sur cette figure joue essentiellement le rôle de détrompeur de position entre les deux parties du barillet. L'étanchéité autour des surfaces frontales des deux parties du barillet est assurée par les joints élastiques annulaires 44, 45, 46, 47.

Dans ce second mode de réalisation, les moyens de retenue des fibres, à leurs extrémités, sont constitués par des bagues 48, 49 rendues solidaires de ces fibres par collage, par exemple ; les surfaces frontales 50, 51 de ces bagues correspondent aux surfaces frontales des fibres qu'elles retiennent.

Dans la première partie 9 du barillet, les traversées qui contiennent les bagues 49 sont constituées de manière que les surfaces frontales des bagues soient en retrait par rapport à la surface frontale 52 de cette première partie du barillet. Dans la deuxième partie 8 du barillet, les traversées 53 sont constituées de manière que les surfaces frontales 50 des bagues 48 soient en avant de la surface frontale de cette deuxième partie du barillet. Il en résulte que la jonction des extrémités des fibres 4, 5 s'opère dans la première partie 9 du barillet.

Dans ce second mode de réalisation du connecteur conforme à l'invention, les éléments d'alignement des fibres sont constitués par les extrémités des bagues 48, qui s'engagent dans la deuxième partie 9 du barillet ; ces bagues présentent à leur extrémité une surface extérieure 54, de forme conique, située en avant de la surface frontale de la deuxième partie 8 du barillet ; cette surface extérieure conique s'engage dans la surface intérieure partiellement conique de la traversée correspondante de la première partie 9 du barillet. Ainsi, il n'est plus nécessaire de placer, entre les deux parties du barillet, des pions d'alignement de ces deux parties. Le contact entre les deux parties 8 et 9 du barillet est assuré grâce aux pièces de butée 16, 17 qui appuient sur des entretoises 55, 56 et 57, 58. Ces entretoises agissent sur les épaulements des bagues 48, 49 par l'intermédiaire des joints élastiques 46, 57. Ainsi, grâce à ce montage, l'alignement des fibres optiques est parfaitement assuré grâce aux bagues d'extrémité de ces fibres, tandis que l'étanchéité autour des surfaces frontales est assurée grâce aux différents joints représentés sur la figure. Ces joints, outre l'étanchéité permettent d'assurer une souplesse du connecteur vis-à-vis notamment des contraintes mécaniques transversales.

Enfin, dans ce second mode de réalisation, du fait de la forme conique de l'extrémité des bagues de retenues des fibres, un volume libre 59 entoure la jonction des fibres. Ce volume libre peut être rempli par un liquide de couplage optique.

Le connecteur qui vient d'être décrit permet de garantir l'étanchéité de la jonction des fibres vis-à-vis de l'environnement de cette jonction ; il permet également de garantir une souplesse du montage, compatible avec l'encastrement de divers éléments qui sont raccordés. Les surfaces frontales des fibres sont légèrement espacées de manière à assurer la protection des états de surface des extrémités des fibres.

**Revendications**

1. Connecteur pour fibres optiques comprenant des moyens (1, 2) de retenue des extrémités (3, 4) de fibres à relier, des moyens (7) d'assemblage et d'alignement des fibres retenues, ces moyens maintenant en regard les surfaces frontales (5, 6) planes des fibres à relier, de sorte que les axes optiques de ces fibres soient alignés, les moyens (7) d'alignement et d'assemblage comprenant un barillet en deux parties (8, 9) présentant des traversées dans lesquelles s'engagent respectivement les moyens de retenue (1, 2) des extrémités de fibres à relier, ces parties de barillet présentant des surfaces frontales (10, 11) en regard, parallèles à celles des fibres, ainsi que des éléments d'alignement (12) des fibres à relier, des moyens creux démontables (18, 19) dont une partie interne maintient en contact, grâce à des moyens de butée (16, 17) les surfaces frontales (10, 11) des deux parties de barillet, ces moyens creux démontables contenant les moyens de retenue et les moyens d'assemblage et d'alignement, et des moyens élastiques (20, 21) pour maintenir l'étanchéité autour des surfaces frontales (10, 11) des deux parties de barillet, à l'intérieur des moyens démontables (18, 19), caractérisé en ce qu'il comprend en outre, dans le prolongement des moyens de butée (16, 17) et solidaire de ceux-ci, une douille (23) traversée par les fibres à relier par l'intermédiaire d'un passage étanche (24), ce passage étanche étant constitué de manière à permettre l'emmagasinage à l'intérieur de la douille, d'une longueur de fibre supérieure à la longueur interne de la douille.

2. Connecteur selon la revendication 1, caractérisé en ce que les moyens de retenue (1, 2) des extrémités de fibres sont constitués par des bagues solidaires de chaque fibre à son extrémité et s'engageant dans les traversées du barillet, de sorte que la surface frontale de chaque bague corresponde à la surface frontale de la fibre correspondante, les surfaces frontales de chaque fibre et de la bague qui lui correspond étant en retrait par rapport à la surface frontale de la partie correspondante du barillet.

3. Connecteur selon la revendication 2, caractérisé en ce que les éléments d'alignement des fibres comprennent au moins un pion (12) de positionnement s'engageant dans chacune des parties du barillet, ce pion s'étendant parallèlement à l'axe optique des fibres.

4. Connecteur selon la revendication 1, caractérisé en ce que les moyens de retenue des extrémités des fibres sont constitués par des bagues (48, 49) solidaires de chaque fibre à son extrémité, de manière que la surface frontale de chaque bague corresponde à la surface frontale de la fibre correspondante, les traversées dans une première partie (9) du barillet étant constituées de manière que les surfaces frontales des bagues soient en retrait par rapport à la surface frontale de cette première partie (9) de barillet, les traversées dans la deuxième partie (8) du barillet étant constituées de manière que les surfaces frontales des bagues soient en avant de la surface frontale de cette deuxième partie du barillet (8), de sorte que la jonction des extrémités de fibres s'opère dans la première partie (9) de barillet, les éléments d'alignement des fibres étant constitués par les bagues de la deuxième partie de barillet, ces bagues présentant une surface extérieure (50, 51) conique dans leur partie qui est située en avant de la surface frontale de la deuxième partie de barillet (8), cette surface extérieure conique s'engageant dans la surface intérieure partiellement conique, de la traversée correspondante de la première partie (9) du barillet.

**Claims**

1. Connector for optical fibres comprising retaining means (1, 2) for the ends (3, 4) of fibres to be connected, means (7) for assembling and aligning the retained fibres, said means holding the flat end surfaces (5, 6) of the retained fibres in face-to-face relationship, whereby the optical axes of the fibres are aligned, the assembling and aligning means (7) comprising a tube formed of two parts (8, 9) having through-passages in which the retaining means (1, 2) for the ends of fibres to be connected are respectively held, said tube parts (8, 9) having facing end surfaces (10, 11) parallel to those of the fibres and alignment members (12) for aligning fibres to be connected, separable hollow means (18, 19) having an internal member holding the end surfaces (10, 11) of the two tube parts in contact, because of abutment means (16, 17), said separable hollow means containing the retaining means and the assembling and aligning means, and elastic means (20, 21), in the interior of the separable means (18, 19), for maintaining a seal around the end surfaces (10, 11) of the two tube parts, characterized in that it additionally comprises, fixed to and prolonging the abutment means (16, 17), a socket (23), through which the fibres to be connected pass, by means of a sealable passage (24), said sealable passage being formed to permit a length of fibre greater than the internal length of the socket to be held within the interior of the socket.

2. Connector according to claim 1, characterized in that the retaining means (1, 2) for the ends of the fibres comprise collars fixed to the end of each fibre, and engaging in the through-passages of the tube, whereby the end surface of each collar is coplanar with the end surface of its corresponding fibre, the end surfaces of each fibre and its corresponding collar being recessed behind the end surface of the corresponding tube part.

3. Connector according to claim 2, characterized in that the alignment members for the fibres comprise at least one locating pin (12) engaging in each tube part, said pin extending parallel to the optical axis of the fibres.

4. Connector according to claim 1, characterized in that the means for retaining the ends of the fibres comprise collars (48, 49) fixed to the end of each fibre, whereby the end surface of each collar is coplanar with the end surface of its corresponding fibre, the through passages of a fibre tube part (9) being formed in such a manner that the end surfaces of the collars are recessed behind the end surface of said first tube part (9), the through passages of the second tube part (8) being formed in such a manner that the end surfaces of the collars project beyond the end surface of said second tube part (8), whereby the junction of the ends of the fibres lies within the first tube part (9), the fibre-alignment members being constituted by the collars of the second tube part, said collars having a conical external surface (50, 51) in that part thereof projecting beyond the end surface of the second tube part (8), said conical external surface engaging in a partially-conical internal surface of the corresponding through passage in the first tube part (9).

**Patentansprüche**

1. Verbinder für optische Fasern, bestehend aus Mitteln (1, 2) zum Halten der Enden (3, 4) der zu verbindenden Fasern, Mitteln (7) zum Zusammenfügen und Ausrichten der gehaltenen Fasern, die die planen Vorderflächen (5, 6) der zu verbindenden Fasern so halten, daß ihre optischen Achsen aufeinander ausgerichtet sind, wobei die Mittel (7) zum Ausrichten und zusammenfügen ein zweiteiliges Gehäuse (8, 9) enthalten, das Bohrungen aufweist, in denen die Mittel (1, 2) zum Halten der Enden der zu verbindenden Fasern liegen, und dessen Teile Vorderflächen (10, 11), die parallel zu den Stirnflächen der Fasern verlaufen, sowie Ausrichtelemente (12) für die zu verbindenden Fasern aufweisen, hohlen, demontierbaren Mittel (18, 19), von denen ein innenliegender Teil aufgrund von Widerlagern (16, 17) die Vorderflächen (10, 11) der Gehäuseteile in Berührung miteinander halten und die die Mittel zum Halten und die Mittel zum Zusammenfügen und Ausrichten enthalten und elastischen Elementen (20, 21) zum Abschließen der Vorderflächen (10, 11) der Gehäuseteile im Inneren der demontierbaren Mittel (18, 19), dadurch gekennzeichnet, daß sie weiterhin in Verlängerung der Widerlager (16, 17) und fest mit ihnen verbunden eine Hülse (23) aufweist, die von den miteinander zu verbindenden Fasern durchquert wird und ihnen einen abgedichteten Zwischenraum (24) im Inneren der Hülse bietet, die die Aufnahme einer Faserlänge erlaubt, die größer ist als die Länge der Hülse.

2. Verbinder nach Anspruch 1, dadurch gekennzeichnet, daß die Haltemittel (1, 2) für die Enden der Fasern von Hülsen gebildet sind, die fest mit jedem Faserende verbunden sind und in den Bohrungen des Gehäuses derart gehalten sind, daß die Stirnfläche einer jeden Hülse mit der Stirnfläche der zugehörigen Faser übereinstimmt, und daß die Stirnflächen jeder Faser und der zugehörigen Hülse gegenüber der Vorderfläche des zugehörigen Gehäuseteils zurückgesetzt sind.

3. Verbinder nach Anspruch 2, dadurch gekennzeichnet, daß die Ausrichtelemente für die Fasern wenigstens einen Ausrichtstift (12) aufweisen, der in eines der Gehäuseteile eingreift und sich parallel zur optischen Achse der Fasern erstreckt.

4. Verbinder nach Anspruch 1, dadurch gekennzeichnet, daß die Haltemittel für die Faserenden von Hülsen (48, 49) gebildet sind, die mit jeder Faser an deren Ende fest derart verbunden sind, daß die Stirnfläche jeder Hülse mit der Stirnfläche der zugehörigen Faser übereinstimmt, daß die Bohrungen in dem ersten Gehäuseteil (9) so ausgebildet sind, daß die Stirnflächen der Hülsen gegenüber der Vorderfläche dieses ersten Gehäuseteils (9) zurückgesetzt sind, daß die Bohrungen im zweiten Gehäuseteil (8) derart ausgebildet sind, daß die Stirnflächen der Hülsen über die Vorderfläche dieses zweiten Gehäuseteils (8) so hinausragen, daß die Verbindung der Faserenden sich im ersten Gehäuseteil (9) vollzieht, die Ausrichtelemente für die Fasern von den Hülsen im zweiten Gehäuseteil gebildet werden, diese Hülsen eine konische Außenfläche (50, 51) in ihrem Bereich aufweisen, der vor der Vorderfläche des zweiten Gehäuseteils (8) liegt, wobei sich diese konische Außenfläche an die teilweise konische Innenfläche der entsprechenden Bohrung des ersten Gehäuseteils (9) anlegt.

**FIG. 1**

**FIG. 2**

FIG. 3

FIG. 4